# EUROPEAN PATENT SPECIFICATION

(11) **EP 1 792 752 B1**
(45) Date of publication and mention of the grant of the patent: **17.03.2010**
(21) Application number: 05785923.3
(22) Date of filing: 21.09.2005
(51) Int. Cl.: B60C 9/20, B60C 9/22, B60C 9/00, B60C 9/18, B60C 11/00

(54) **PNEUMATIC RADIAL TIRE FOR SMALL-SIZED TRUCK**
RADIALLUFTREIFEN FÜR KLEINEN LASTWAGEN
PNEUMATIQUE RADIAL POUR CAMIONNETTE

(30) Priority: 24.09.2004 JP 2004277223
(43) Date of publication of application: 06.06.2007
(73) Proprietor: THE YOKOHAMA RUBBER CO., LTD., Tokyo 105-8685 (JP)
(72) Inventor: OSAKI, Michio, c/o The Yokohama Rubber Co. Ltd., Hiratsuka-shi, Kanagawa 2548601 (JP)
(74) Representative: Siegert, Georg
(86) International application number: PCT/JP2005/017347
(87) International publication number: WO 2006/033337

(56) References cited:
- JP-A- 9 076 709
- JP-A- 9 193 605
- JP-A- 10 100 618
- JP-A- 2000 079 808
- JP-A- 2003 072 316
- JP-U- 63 012 406

## Description

### FIELD OF THE INVENTION

The present invention relates to a pneumatic radial tire suitable for a light truck, and more specifically to a pneumatic radial tire for a light truck, which is designed to improve the contact shape, to suppress the growth and strain of a belt edge portion due to the creep strain of a carcass layer, and to prevent the separation failure at the belt edge portion.

### DESCRIPTION OF THE RELATED ART

In general, with regard to the pneumatic radial tire for a light truck, since the tire is used under a high load condition, there is a tendency that the contact pressure in the shoulder area of the tread portion becomes relatively high compared to that in the center area of the tread portion. For this reason, there is a problem that the shoulder wear tends to occur since the contact length in the shoulder area becomes longer than that in the center area.

As a measure against this problem, the method generally adopted is to prevent the contact length in the shoulder area from being elongated, by setting the curvature radius in the shoulder area smaller than that in the center area, and setting the difference between the diameters in the center and shoulder areas large. However, under present circumstances, especially for the tires with an aspect ratio of 70% or less, a sufficient effect of improving the contact shape cannot be obtained only by setting the curvature radius in the shoulder area small, and providing the relative difference of the diameters in the tread portion.

In addition, in the pneumatic radial tire for a light truck, it is common to use organic fiber cords for the carcass material in view of the simplicity in manufacture and the weight reduction (see Japanese patent application Kokai publication No. H06-24206, for example). However, for the pneumatic radial tire for a light truck, since the air pressure used is high, and it is used under a high load condition, there is a case where the creep strain occurs in the carcass layer as the mileage increases, and the carcass periphery is elongated. There is a problem that, when the creep strain occurs in the carcass layer, the strain occurring in the belt edge portion increases, and the separation failure at the belt edge portions tends to occur toward the final stage of the wear life.

Incidentally, it is conceivable that, in order to prevent the separation failure at the belt edge portions, a belt cover layer formed of organic fiber cords is added so as to cover the belt edge portion, as in the case of the pneumatic radial tire for a passenger car. However, for the pneumatic radial tire for a light truck, since the air pressure used is high, and the tire is used under a high load condition, there is a possibility that the creep strain occurs in the belt cover layer as in the case of the carcass layer. Accordingly, further improvement is required.

### SUMMARY OF THE INVENTION

An object of the present invention is to provide a pneumatic radial tire for a light truck which is designed to improve the contact shape, to suppress the growth and strain of a belt edge portion due to the creep strain of a carcass layer, and to prevent the separation failure at the belt edge portion.

A pneumatic radial tire for a light truck of the present invention for achieving the above object is one, in which a carcass layer is formed of organic fiber cords, the tire has a casing structure in which at least two belt layers are disposed on a radially outer side of the carcass layer, and an air pressure corresponding to the maximum load carrying capacity is in the range of 350 to 650 kPa, wherein a belt cover layer is disposed around an edge portion of the belt layer, the belt cover layer comprising an organic fiber cord wound around the tire in a circumferential direction of the tire, the organic fiber cord having an intermediate elongation of at most 5.5% under a load of 67 N.

In the present invention, in the pneumatic radial tire for a light truck, which includes the carcass layer formed of the organic fiber cords, and for which the air pressure used is relatively high, the belt cover layer is disposed around the edge portion of the belt layer, the belt cover layer comprising the organic fiber cord wound around the tire in a circumferential direction of the tire, the organic fiber cord having a low intermediate elongation. Accordingly, it is made possible to prevent the contact length in the shoulder area from being elongated under a high-load use condition, and to improve the contact shape from the time when the tire is brand-new to the final stage of the wear life. As a result, it is possible to prevent the occurrence of the shoulder wear. In addition, since the belt cover layer is added, it is possible to suppress the growth and strain of the belt edge portion due to the creep strain of the carcass layer, and to prevent the separation failure at the belt edge portion. Thus, it is possible to increase the durability lasting until the final stage of the wear life.

It is preferable that the pneumatic radial tire for a light truck have a tread profile such that, in relation to a curvature radius Rce in a center area of a tread portion, a curvature radius Rsh in a shoulder area of the tread portion satisfies Rsh<Rce, and more preferably satisfies Rsh<0.5Rce, when the tire is mounted on a standard rim and the air whose pressure corresponds to the maximum load carrying capacity is filled into the tire. When the curvature radius Rsh in the shoulder area is set relatively small, and the difference between the diameters in the center and shoulder areas is set large, it is possible to prevent the contact length in the shoulder area from being elongated. Accordingly, it is possible to optimize the contact shape under a high-load use condition by virtue of the synergy effect between the tread profile and the belt cover layer.

It is preferable that, in addition to that the organic fiber cord forming the belt cover layer has such an intermediate elongation, the organic fiber cord have a structure in which a plurality of fiber bundles are stranded, at least one of the fiber bundles being made of one of polyethylene-2, 6-naphthalate and polyethylene terephthalate. Such an organic fiber cord exhibits a favorable hooping effect.

It is preferable that the present invention be applied to the pneumatic radial tire for a light truck including three belt layers on the radially outer side of the carcass layer. In particular, the present invention is remarkably effective in the pneumatic radial tire for a light truck in which an aspect ratio (H/W) of the tire satisfies 0.45<H/W<0.75, the aspect ratio being obtained from a section height H and a section width W of the tire, which are given when the tire is mounted on a standard rim and the air whose pressure corresponds to the maximum load carrying capacity is filled into the tire.

It should be noted that the air pressure corresponding to the maximum load carrying capacity means the air pressure corresponding to the maximum load carrying capacity specified by a standard. This is the air pressure specified in the correspondence table of air pressures and load carrying capacities in JATMA Year Book (the 2004 edition), for example. The intermediate elongation is the elongation given when a force of 67 N is applied to a single cord under the conditions specified in JIS L1017, and is measured after vulcanization of the tire. "Around an edge portion of the belt layer" means the region containing the area extending from an edge of the widest belt layer toward the inside in the tire width direction by a width of at least 10 mm.

### BRIEF DESCRIPTION OF THE DRAWINGS

FIG. 1 is a meridian cross section showing a pneumatic radial tire for a light truck according to an embodiment of the present invention.
FIG. 2 is an outline diagram showing a profile of the pneumatic radial tire of FIG. 1.

### DESCRIPTION OF THE PREFERED EMBODIMENT

A detailed description will be given below of a configuration of the present invention with reference to the accompanying drawings.

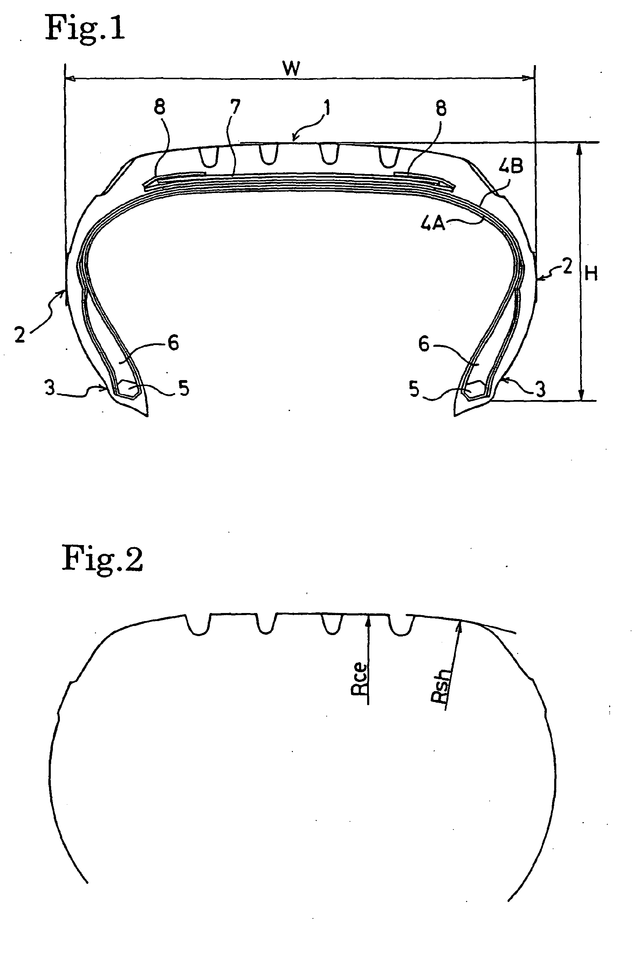

FIG. 1 shows a pneumatic radial tire for a light truck according to an embodiment of the present invention, and FIG. 2 shows a profile thereof. In FIG. 1, reference numeral 1 indicates a tread portion; 2, side wall portions; and 3, bead portions. Between the pair of bead portions 3, 3, two carcass layers 4A and 4B are laid. Each of these carcass layers 4A and 4B is formed of a plurality of organic fiber cords oriented in a tire radial direction. As the organic fiber cords, nylon cords, polyester cords, or the like can be used. The inner-side carcass layer 4A is turned up from the axial inside of the tire to the axial outside thereof so as to wrap bead cores 5 and bead fillers 6 buried in the bead portions 3. The outer-side carcass layer 4B is disposed in such a manner that the carcass layer 4B extends to a side of the bead core 5 along the outer side of the turned up portion of the carcass layer 4A.

On the radially outer side of the carcass layers 4A and 4B in the tread portion 1, three belt layers 7 are buried entirely around the tire. These belt layers 7 include a plurality of reinforcing cords oblique with respect to the circumferential direction of the tire, the reinforcing cords being arranged in such a manner that the cords intersect each other between the layers. In addition, around each edge portion of the belt layers 7, a belt cover layer 8 is provided. The belt cover layer 8 is formed by winding organic fiber cords around the tire at substantially zero degree with respect to the circumferential direction of the tire, the organic fiber cord having an intermediate elongation of at most 5.5% under a load of 67 N.

In the pneumatic radial tire, each of the carcass layers 4A and 4B is formed of the organic fiber cords, and the pneumatic radial tire has a casing structure in which the three belt layers 7 are disposed on the radially outer side of the carcass layers 4A and 4B. At the same time, the air pressure corresponding to the maximum load carrying capacity is specified in the range of 350 to 650 kPa. In addition, the pneumatic radial tire is such that the aspect ratio (H/W) is set to satisfy 0.45<H/W<0.75, the aspect ratio being obtained from the section height H and the section width W of the tire, which are given when the tire is mounted on a standard rim and the air whose pressure corresponds to the maximum load carrying capacity is filled into the tire.

As described above, the carcass layers 4A and 4B each being formed of the organic fiber cords are provided, and, in the pneumatic radial tire for a light truck, for which the air pressure used is relatively high, the belt cover layers 8 are disposed around both edge portions of the belt layers 7, each belt cover layer being formed by winding, along the circumferential direction of the tire, the organic fiber cords with a low intermediate elongation, so that the contact length in a shoulder area is prevented from being elongated under a high-load use condition, and that it is possible to improve the contact shape from the time when the tire is brand-new to the final stage of the wear life. By forming the favorable contact shape in this way, it is possible to prevent the occurrence of the shoulder wear.

In addition, since the belt cover layers 8 are added, it is possible to suppress the growth and strain of both edge portions of the belt layers 7 due to the creep strain of the carcass layers 4A and 4B, and to prevent the separation failure at the edge portions. Accordingly, even in the case of the pneumatic radial tire for a light truck, in which the organic fiber cords are used in the carcass layers 4A and 4B, it is possible to increase the durability lasting until the final stage of the wear life.

When the intermediate elongation of the organic fiber cord, which forms the belt cover layer 8, under a load of 67 N, is larger than 5.5%, not only the effect of improving the contact shape but also the effect of suppressing the growth and strain of the belt edge portions become insufficient due to the insufficiency of the hooping effect. A preferable range of the intermediate elongation is 2.5% to 5.5%.

In addition, as the organic fiber cord forming the belt cover layer 8, one having a structure in which a plurality of fiber bundles are stranded, at least one of the fiber bundles being made of polyethylene-2,6-naphthalate or polyethylene terephthalate, can be used. For example, an organic fiber cord, in which a plurality of fiber bundles made of polyethylene-2, 6-naphthalate (PEN) or polyethylene terephthalate (PET) are stranded, and an organic fiber cord of a hybrid structure, in which a fiber bundle, which is made of polyethylene-2, 6-naphthalate or polyethylene terephthalate, and another kind of fiber bundle made of polyester or nylon are stranded, can be cited. Alternatively, a cord made of polyolefin ketone (POK) or the like may be used.

Moreover, as shown in FIG. 2, the pneumatic radial tire has a tread profile such that, in relation to the curvature radius Rce in a center area of the tread portion 1, the curvature radius Rsh in the shoulder area of the tread portion 1 satisfies Rsh<Rce, and more preferably satisfies Rsh<0.5Rce, when the tire is mounted on a standard rim and the air whose pressure corresponds to the maximum load carrying capacity is filled into the tire. In the meridian cross section of the tire, the arc in the center area, which is described by the curvature radius Rce, and the arc in the shoulder area, which is described by the curvature radius Rsh, touch each other without forming an inflection point.

When the curvature radius Rsh in the shoulder area is set relatively small, and the difference between the diameters in the center and shoulder areas is set large, it is possible to prevent the contact length in the shoulder area (the contact length in the circumferential direction of the tire) from being elongated. Here, if Rsh ≧ Rce, the effect of improving the contact shape by virtue of the tread profile cannot be obtained.

In the above description of the embodiment, although the explanation has been given of the case of the pneumatic radial tire including the two carcass layers each being formed of the organic fiber cords, the present invention can be applied to a pneumatic radial tire including at least one carcass layer. In addition, although the explanation has been given of the case of the pneumatic radial tire including the three belt layers in the above description of the embodiment, the present invention can be applied to a pneumatic radial tire including at least two belt layers.

Although a preferred embodiment of the present invention has been described above in detail, it should be appreciated that various alteration, substitution and replacement can be carried out to the present invention without departing from the spirit and scope of the present invention defined by the claims.

### EXAMPLES

The tires of examples 1 to 3 and a conventional example were respectively fabricated as follows. In the pneumatic radial tire for a light truck, in which the tire size was 205/60R17.5; the carcass layer was formed of organic fiber cords; the tire had a casing structure in which the three belt layers were disposed on the radially outer side of the carcass layers; and the air pressure corresponding to the maximum load carrying capacity was 600 kPa, belt cover layers were added around both edge portions of the belt layers, and the intermediate elongation of the organic fiber cord forming the belt cover layer under a load of 67 N was varied. In addition, in the tires of the examples 1 to 3 and the conventional example, the curvature radius Rsh in the shoulder area of the tread portion and the curvature radius Rce in the center area of the tread portion, which were given when the tire is mounted on a standard rim and the air whose pressure corresponds to the maximum load carrying capacity was filled into the tires, were varied for each tire.

For each of these tested tires, the squareness ratio of the contact shape and the separation force of the belt portion were measured when the tire was brand new, and after a drum durability test. The results are shown in Table 1. In the drum durability test, the inflation pressure was set to 133% of the air pressure corresponding to the maximum load carrying capacity; the load was set to 130% of the maximum load carrying capacity; the speed was set to 60 km/h; and the tested tire was made to travel 20,000 km on an indoor drum.

The squareness ratio of the contact shape is the ratio of the contact length in the shoulder area to the contact length in the center area given when the tire is mounted on a standard rim, the air whose pressure corresponds to the maximum load carrying capacity is filled into the tire, and the maximum load is applied. The acceptance criteria were as follows: the squareness ratio after the drum durability test was 1.40 or less; and the increase of the squareness ratio compared to that given when the tire was brand new was 10% or less.

The separation force of the belt portion is the force required to separate the belt portion from the carcass layer. For each tire, the separation force of the brand-new tire was assumed as 100, and the separation force remaining after the drum durability test was given as an index. The acceptance criterion was that the remaining separation force was 90 or more.

**Table 1**

| | Conventional Example | Example 1 | Example 2 | Example 3 |
|---|---|---|---|---|
| Intermediate elongation under the load of 67 N (%) | 7.0 | 5.5 | 5.5 | 5.0 |
| Curvature radius Rce in the center area | 1400 | 1400 | 1400 | 1400 |
| Curvature radius Rsh in the shoulder area | 160 | 150 | 700 | 150 |
| Squareness ratio of the brand-new tire | 1.15 | 1.10 | 1.28 | 1.08 |
| Squareness ratio after the drum durability test | 1.40 | 1.20 | 1.39 | 1.14 |
| Remaining separation force (index) | 85 | 90 | 90 | 92 |

As can be seen from Table 1, the tires of the examples 1 to 3 achieved good results concerning the squareness ratio of the contact shape and the remaining separation force of the belt portion in comparison with the conventional example.

## Claims

1. A pneumatic radial tire for a light truck, in which a carcass layer (4A, 4B) is formed of organic fiber cords, the tire has a casing structure in which at least two belt layers (7) are disposed on a radially outer side of the carcass layer, and an air pressure corresponding to the maximum load carrying capacity is in the range of 350 to 650 kPa, **characterized in that**
a belt cover layer (8) is disposed around each edge portion of the belt layer (7), the belt cover layer comprising an organic fiber cord wound around the tire in a circumferential direction of the tire, the organic fiber cord having an intermediate elongation of at most 5.5% under a load of 67 N.

2. The pneumatic radial tire for a light truck according to claim 1, having a tread profile such that, in relation to a curvature radius Rce in a center area of a tread portion, a curvature radius Rsh in a shoulder area of the tread portion satisfies Rsh<Rce when the tire is mounted on a standard rim and the air whose pressure corresponds to the maximum load carrying capacity is filled into the tire.

3. The pneumatic radial tire for a light truck according to claim 1, having a tread profile such that, in relation to a curvature radius Rce in a center area of a tread portion, a curvature radius Rsh in a shoulder area of the tread portion satisfies Rsh<0. 5Rce when the tire is mounted on a standard rim and the air whose pressure corresponds to the maximum load carrying capacity is filled into the tire.

4. The pneumatic radial tire for a light truck according to any one of claims 1 to 3, wherein the organic fiber cord forming the belt cover layer has a structure in which a plurality of fiber bundles are stranded, at least one of the fiber bundles being made of one of polyethylene-2,6-naphthalate and polyethylene terephthalate.

5. The pneumatic radial tire for a light truck according to any one of claims 1 to 4, wherein the number of the belt layers disposed on the radially outer side of the carcass layer is three.

6. The pneumatic radial tire for a light truck according to any one of claims 1 to 5, wherein an aspect ratio (H/W) of the tire satisfies 0.45<H/W<0.75, the aspect ratio being obtained from a section height H and a section width W of the tire, which are given when the tire is mounted on a standard rim and the air whose pressure corresponds to the maximum load carrying capacity is filled into the tire.

## Patentansprüche

1. Radialer pneumatischer Reifen für einen leichten Lastkraftwagen, bei dem eine Karkassenschicht (4A, 4B) aus Schnüren aus organischen Fasern ausgebildet ist, wobei der Reifen eine Gehäusestruktur aufweist, in der wenigstens zwei Gürtelschichten (7) auf einer radialen Außenseite der Karkassenschicht angeordnet sind, und ein Luftdruck, welcher der maximalen Lasttragekapazität entspricht, sich im Bereich von 350 bis 650 kPa befindet, **dadurch gekennzeichnet, dass**
eine Gürtelabdeckschicht (8) um jeden Randabschnitt der Gürtelschicht (7) angeordnet ist, wobei die Gürtelabdeckschicht eine Schnur aus organischen Fasern umfasst, die in einer Umfangsrichtung des Reifens um den Reifen gewickelt ist, wobei die Schnur aus organischen Fasern eine mittlere Zugdehnung von höchstens 5,5 % unter einer Last von 67 N aufweist.

2. Radialer pneumatischer Reifen für einen leichten Lastkraftwagen nach Anspruch 1, der ein solches Laufflächenprofil aufweist, dass bezüglich eines Krümmungsradius (Rce) in einem Zentrumsbereich eines Laufflächenabschnitts ein Krümmungsradius (Rsh) in einem Schulterbereich des Laufflächenabschnitts Rsh < Rce genügt, wenn der Reifen auf eine Standardfelge aufgezogen ist und Luft, deren Druck der maximalen Lasttragekapazität entspricht, in den Reifen gefüllt ist.

3. Radialer pneumatischer Reifen für einen leichten Lastkraftwagen nach Anspruch 1, der ein solches Laufflächenprofil aufweist, dass bezüglich eines Krümmungsradius (Rce) in einem Zentrumsbereich eines Laufflächenabschnitts ein Krümmungsradius (Rsh) in einem Schulterbereich in dem Laufflächenabschnitt Rsh < 0,5Rce genügt, wenn der Reifen auf eine Standardfelge aufgezogen ist und Luft, deren Druck der maximalen Lasttragekapazität entspricht, in den Reifen gefüllt ist.

4. Radialer pneumatischer Reifen für einen leichten Lastkraftwagen nach einem der Ansprüche 1 bis 3, bei dem die Schnur aus organischen Fasern, welche die Gürtelabdeckschicht ausbildet, eine Struktur aufweist, in der eine Mehrzahl von Faserbündeln verseilt sind, wobei wenigstens eines der Faserbündel entweder aus Polyethylen-2,6-Naphthalat oder Polyethylenterephthalat gefertigt ist.

5. Radialer pneumatischer Reifen für einen leichten Lastkraftwagen nach einem der Ansprüche 1 bis 4, bei dem die Anzahl der Gürtelschichten, die auf der radialen Außenseite der Karkassenschicht angeordnet sind, drei beträgt.

6. Radialer pneumatischer Reifen für einen leichten Lastkraftwagen nach einem der Ansprüche 1 bis 5, bei dem ein Aspektverhältnis (H/W) des Reifens 0,45 < H/W < 0,75 genügt, wobei das Aspektverhältnis aus einer Abschnittshöhe H und einer Abschnittsbereite W des Reifens erhalten wird, die gegeben sind, wenn der Reifen auf eine Standardfelge aufgezogen ist und Luft, deren Druck der maximalen Lasttragekapazität entspricht, in den Reifen gefüllt ist.

## Revendications

1. Pneu pneumatique radial pour une camionnette légère, dans lequel une couche formant carcasse (4A, 4B) est formée de fils câblés en fibres organiques, le pneu a une structure d'enveloppe dans laquelle au moins deux couches de ceinture (7) sont disposées sur un côté extérieur radial de la couche formant carcasse, et une pression d'air correspondant à la capacité de support de charge maximale est dans la plage de 350 à 650 kPa, **caractérisé en ce que**
une couche de couverture de ceinture (8) est disposée autour de chaque partie de bord de la couche de ceinture (7), la couche de couverture de ceinture comprenant un fil câblé en fibres organiques enroulé autour du pneu dans une direction circonférentielle du pneu, le fil câblé en fibres organiques ayant un allongement intermédiaire d'au plus 5,5 % sous une charge de 67 N.

2. Pneu pneumatique radial pour une camionnette légère selon la revendication 1, ayant un profil de bande de roulement de sorte que, par rapport à un rayon de courbure Rce dans une zone centrale d'une partie formant bande de roulement, un rayon de courbure Rsh dans une zone d'épaulement de la partie formant bande de roulement satisfait à Rsh < Rce lorsque le pneu est monté sur une jante standard et lorsque le pneu est rempli d'air dont la pression correspond à la capacité de support de charge maximale.

3. Pneu pneumatique radial pour une camionnette légère selon la revendication 1, ayant un profil de bande de roulement de sorte que, par rapport à un rayon de courbure Rce dans une zone centrale d'une partie formant bande de roulement, un rayon de courbure Rsh dans une zone d'épaulement de la partie formant bande de roulement satisfait à Rsh < 0,5 Rce lorsque le pneu est monté sur une jante standard et lorsque le pneu est rempli de l'air dont la pression correspond à la capacité de support de charge maximale.

4. Pneu pneumatique radial pour une camionnette légère selon l'une quelconque des revendications 1 à 3, dans lequel le fil câblé en fibres organique formant la couche de couverture de ceinture a une structure dans laquelle une pluralité de faisceaux de fibres sont toronnés, au moins un des faisceaux de fibre étant réalisé à partir de l'un de polyéthylène-2,6-naphthalate et de polytéréphtalate d'éthylène.

5. Pneu pneumatique radial pour une camionnette légère selon l'une quelconque des revendications 1 à 4, dans lequel le nombre des couches de ceinture disposées sur le côté extérieur radial de la couche formant carcasse est égal à trois.

6. Pneu pneumatique radial pour une camionnette légère selon l'une quelconque des revendications 1 à 5, dans lequel un rapport d'aspect (H/W) du pneu satisfait à 0,45 < H/W < 0,75, le rapport d'aspect étant obtenu à partir d'une hauteur de section H et d'une largeur de section W du pneu, qui sont données lorsque le pneu est monté sur une jante standard et que le pneu est rempli de l'air dont la pression correspond à la capacité de support de charge maximale.
